# FASCICULE DE BREVET EUROPEEN

(11) **EP 2 878 867 B1**
(45) Date de publication et mention de la délivrance du brevet: **04.01.2017**
(21) Numéro de dépôt: 14194799.4
(22) Date de dépôt: 25.11.2014
(51) Int. Cl.: F16K 15/02

(54) **Vanne à clapet à surfaces de contact optimisées**
Ventil mit optimierten Kontaktflächen
Valve with optimised contact surfaces

(30) Priorité: 28.11.2013 FR 1361759
(43) Date de publication de la demande: 03.06.2015
(73) Titulaire: General Electric Technology GmbH, 5400 Baden (CH)
(72) Inventeur: PIERRES, Emilien, 69001 LYON (FR); TOQUET, Nicolas, 73160 SAINT THIBAUD DE COUZ (FR); LEDRU, Roger, 38230 TIGNIEU (FR); REYX, Cyrille, 73420 VIVIERS DU LAC (FR); CARTIER-LANGE, Damien, 73100 MOUXY (FR); BEAUDOIN, Loic, 38610 GIERES (FR)
(74) Mandataire: Brevalex

(56) Documents cités:
- EP-A2- 1 650 412
- GB-A- 712 833
- US-A1- 2010 326 958

## Description

### DOMAINE TECHNIQUE

L'invention propose une valve à clapet de décharge pour une chambre de coupure d'un disjoncteur haute ou moyenne tension.

L'invention propose plus particulièrement une valve à clapet pour laquelle les sections de passage et les surfaces d'appui pour le gaz diélectrique sont optimisées afin de réduire l'effort produit par un ressort de rappel de la vanne, par rapport aux solutions existantes et aussi pour stabiliser le mouvement du clapet.

### ÉTAT DE LA TECHNIQUE ANTÉRIEURE

Une valve à clapet de décharge pour une chambre de coupure d'un disjoncteur haute ou moyenne tension comporte principalement un corps percé d'orifices de passage, au travers desquels un gaz diélectrique sous pression est destiné à circuler, pour passer depuis une chambre de compression vers une chambre de décharge lorsqu'une surpression se produit dans la chambre de compression.

La valve à clapet comporte aussi un clapet monté mobile par rapport au corps entre une position d'obturation des orifices et une position de non obturation des orifices, en fonction de la différence entre les pressions qui règnent de chaque côté du clapet.

Le clapet comporte ainsi une face d'appui qui vient en contact contre une face d'appui en vis-à-vis du corps et une face opposée à la face d'appui, sur laquelle agit un ressort de rappel du clapet en position d'obturation des orifices.

Lorsque le clapet est en position d'obturation des orifices, le gaz diélectrique situé du côté du corps, par rapport au clapet, n'est en contact qu'avec une partie de la face d'appui du clapet qui est située en face des orifices. Le reste de la face d'appui du clapet est en contact et presse contre la face d'appui du corps.

Par conséquent, l'effort résultant de la pression de gaz sur la face d'appui est défini en fonction de la section des orifices.

Lorsque la pression de gaz pressant sur la face d'appui du clapet est suffisamment importante pour provoquer le déplacement du clapet vers sa position de non obturation des orifices, à l'encontre de l'effort exercé par le ressort de rappel, le clapet se déplace axialement pour ne plus venir en contact avec la face d'appui du corps.

Le gaz se répartit alors sur toute la superficie de la face d'appui du clapet.

L'effort résultant de la pression du gaz sur la totalité de la face d'appui du clapet est alors augmentée fortement et rapidement, c'est-à-dire en fonction du rapport entre la surface totale de la face d'appui du clapet et la section totale des orifices. Le clapet se déplace alors brusquement vers la position de non obturation des orifices.

Un tel déplacement brusque du clapet peut provoquer des détériorations mécaniques du clapet ou de son système de guidage et provoque aussi une décharge non stable du gaz.

L'invention a pour but de proposer une vanne à clapet de décharge qui est réalisée de manière à limiter la différence d'efforts du gaz sur le clapet entre la position d'obturation des orifices et le début du décollement du clapet d'avec le corps principal, afin de limiter l'effort exercé par le ressort de rappel sur le clapet, ainsi que de stabiliser le mouvement du clapet.

Le document GB 712 833 A décrit une valve à clapet conforme au préambule de la revendication 1.

### EXPOSÉ DE L'INVENTION

L'invention propose une valve à clapet de décharge pour une chambre de coupure d'un disjoncteur haute ou moyenne tension comprenant
un corps s'étendant dans un plan radial par rapport à un axe principal de la chambre de coupure, dans lequel une pluralité d'orifices axiaux débouchants sont formés et au moins un clapet d'obturation.
Le corps comporte un conduit annulaire prolongeant axialement les orifices et qui est apte à être obturé par le clapet.

Le conduit annulaire permet d'augmenter la surface du clapet qui est en contact avec le gaz provenant des orifices lorsque le clapet est en position d'obturation, améliorant par conséquent la stabilité du fonctionnement de la valve à clapet.

Le conduit annulaire comporte une première partie dans laquelle les orifices débouchent et une deuxième partie qui est apte à être obturée par le clapet.

La première partie du conduit annulaire est délimitée par une paroi annulaire externe qui est située à une cote radiale supérieure à la cote radiale des orifices et par une deuxième paroi annulaire interne qui est située à une cote radiale inférieure à la cote radiale des orifices.

De préférence, la section de la deuxième partie du conduit annulaire est inférieure ou égale au cumul des sections des orifices.

De préférence, les orifices sont répartis le long d'un cercle centré sur l'axe principal de la valve à clapet et en ce que le conduit est de forme annulaire centré sur l'axe principal de la valve à clapet.

De préférence, le clapet est de forme annulaire et est apte à venir en contact contre l'extrémité libre des deux parois annulaires délimitant le conduit

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :

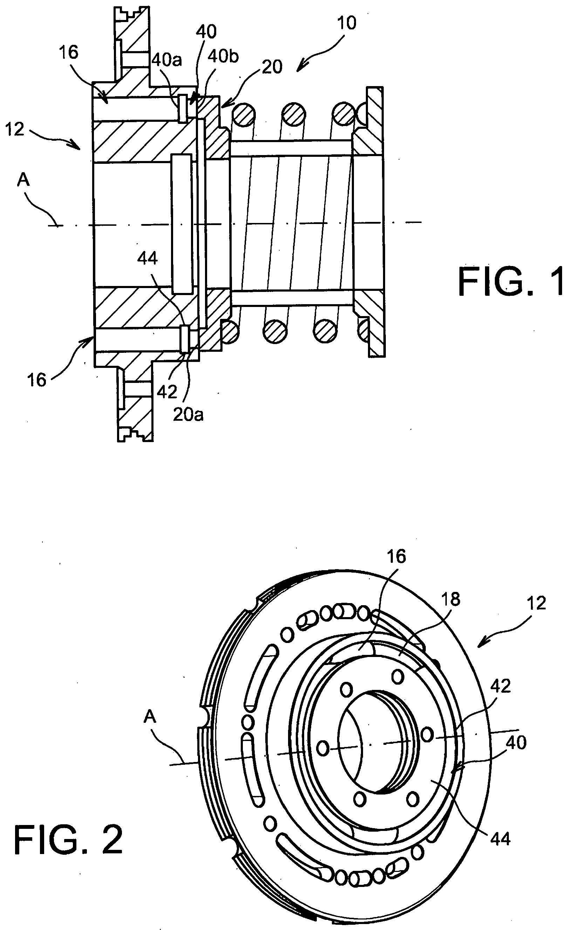

- la figure 1 est une section axiale d'une valve à clapet selon l'invention ;
- la figure 2 est une représentation schématique en perspective du corps de la valve à clapet représentée à la figure 1.

### EXPOSÉ DÉTAILLÉ DE MODES DE RÉALISATION PARTICULIERS

On a représenté aux figures une valve à clapet 10 pour une chambre de coupure d'un disjoncteur de ligne haute ou moyenne tension.

La valve à clapet 10 est destinée à être montée entre deux volumes de la chambre de coupure, et à raccorder ou non ces deux volumes selon que la pression de gaz diélectrique dans un premier volume est supérieure ou non à une pression de gaz dite critique qui est définie en fonction de la pression de gaz dans le deuxième volume et par un effort de rappel exercé par un ressort (non représenté).

La valve à clapet 10 comporte un corps principal 12 qui est ici de forme principale annulaire dont l'axe principal A est coaxial à l'axe principal de la chambre de coupure dans laquelle la valve à clapet 10 est montée, qui sépare les deux volumes de la chambre de coupure.

Le corps annulaire 12 comporte des orifices 16 destinés à mettre en communication les deux volumes.

Chaque orifice 16 est ici de forme oblongue et s'étend sur un arc de cercle centré sur l'axe principal A de la valve à clapet 10. Tous les orifices sont ici répartis autour de l'axe principal A sur un même cercle et forment des segments du cercle.

Le corps annulaire 12 comporte une portion de liaison radiale 18 séparant deux orifices 16 adjacents.

Ici, le corps annulaire comporte trois orifices 16 et trois portions de liaison radiales 18.

Le corps 12 compote aussi un conduit annulaire 40 prolongeant axialement les orifices 16.

Les orifices 16 et le conduit annulaire 40 forment une voie de communication entre les deux volumes de la chambre de coupure, qui est aménagée au travers du corps 12.

Le conduit annulaire 40 est réalisé en deux parties 40a, 40b consécutives axialement.

Une première partie 40a du conduit annulaire 40 est située du côté des orifices 16 et les orifices 16 débouchent dans la première partie axiale 40a. La deuxième partie axiale 40b du conduit 40 prolonge la première partie 40a et débouche vers le deuxième volume de la chambre de coupure.

La première partie 40a du conduit est délimitée radialement par deux parois annulaires 42, 44, qui sont réparties radialement de part et d'autre des orifices 16. Une première paroi 42 est donc située à une cote radiale supérieure à la cote radiale des orifices 16, la deuxième paroi 44 est située à une cote radiale inférieure à la cote radiale des orifices.

Ainsi, la section de la première partie 40a du conduit 40 est supérieure à la somme des sections des orifices.

La section de la deuxième partie 40b du conduit est inférieure à la section de la première partie 40. De préférence, la section de la deuxième partie 40b du conduit 40 est égale ou inférieure au cumul des sections des orifices 16.

La valve à clapet 10 comporte aussi un clapet 20 d'obturation de cette voie de communication formée par les orifices 16 et le conduit annulaire 40, qui s'étend dans un plan radial par rapport à l'axe principal A de la valve à clapet 10 et qui est apte à venir en contact contre le corps 12.

Le clapet 20 est ici apte à obturer en totalité la deuxième partie 40b du conduit 40. Il est ainsi de forme annulaire centré sur l'axe principal A de la valve à clapet 10 et sa dimension radiale est légèrement supérieure à la dimension radiale de du conduit 40.

Le clapet comporte une face d'appui 20a qui est située en vis-à-vis de la deuxième partie 40b du conduit 40 pour obturer le conduit annulaire 40.

Aussi, la face d'appui 20a du clapet 20 comporte une portion circulaire externe et une portion circulaire interne coaxiales, qui viennent en contact avec l'extrémité libre de chacune des parois annulaires qui délimitent radialement la deuxième partie 40b du conduit annulaire 40.

La superficie de ces zones de contact est relativement réduite, ce qui permet de concentrer l'effort d'appui du clapet 20 sur la le corps 12 en une surface moindre, améliorant par conséquent l'étanchéité de l'obturation du conduit annulaire 40.

Comme on l'a dit plus haut, la section de la deuxième partie 40b du conduit annulaire 40 est inférieure ou égale à la somme des sections des orifices 16.

Ainsi, lorsque le clapet 20 est en position d'obturation du conduit 40, le gaz est en contact contre une portion de la face d'appui 20a du clapet 20 dont la superficie est inférieure à la somme des sections des orifices 16. Par contre, lorsque le clapet 20 n'est plus en contact avec la deuxième partie 40b du conduit annulaire 40, le gaz est en contact avec la totalité de la face d'appui 20a du clapet 20.

La différence entre cette portion de la face d'appui 20a du clapet 20 et la face d'appui 20a du clapet 20 est inférieure à la différence entre la somme des sections des orifices 16 et la face d'appui 20a du clapet 20.

La pression de gaz nécessaire pour provoquer le déplacement du clapet 20 vers une position de non obturation des orifices 16 est donc moins importante que lorsque la pression de gaz n'est exercée que sur une surface correspondant à la somme des superficies des orifices 16 uniquement.

## Revendications

1. Valve à clapet de décharge (10) pour une chambre de coupure d'un disjoncteur haute ou moyenne tension comprenant
un corps (12) s'étendant dans un plan radial par rapport à un axe principal de la chambre de coupure, dans lequel une pluralité d'orifices (16) axiaux débouchants sont formés et au moins un clapet (20) d'obturation,
dans laquelle le corps (12) comporte un conduit (40) annulaire prolongeant axialement les orifices (16) et qui est apte à être obturé par le clapet (20),
et dans laquelle le conduit (40) annulaire comporte une première partie (40a) dans laquelle les orifices (16) débouchent et une deuxième partie (40b) qui est apte à être obturée par le clapet (20),
**caractérisée en ce que** la première partie (40a) du conduit annulaire (40) est délimitée par une paroi annulaire externe (42) qui est située à une cote radiale supérieure à la cote radiale des orifices (16) et par une deuxième paroi annulaire (44) interne qui est située à une cote radiale inférieure à la cote radiale des orifices (16).

2. Valve à clapet (10) selon la revendication précédente, **caractérisée en ce que** la section de la deuxième partie (40b) du conduit (40) annulaire est inférieure ou égale au cumul des sections des orifices (16).

3. Valve à clapet (10) selon la revendication précédente, **caractérisée en ce que** les orifices (16) sont répartis le long d'un cercle centré sur l'axe principal (A) de la valve à clapet (10) et **en ce que** le conduit (40) est de forme annulaire centré sur l'axe principal de la valve à clapet (10).

4. Valve à clapet (10) selon la revendication précédente, **caractérisé en ce que** le clapet (20) est de forme annulaire et est apte à venir en contact contre l'extrémité libre des deux parois annulaires délimitant le conduit (40).

## Patentansprüche

1. Auslass-Klappenventil (10) für eine Schaltkammer eines Hoch- oder Mittelspannungs-Trennschalters, umfassend:
einen Körper (12), welcher sich in einer radialen Ebene bezüglich einer Hauptachse der Schaltkammer erstreckt, in welchem eine Mehrzahl von axial verlaufenden Öffnungen (16) gebildet sind, und wenigstens eine Verschlussklappe (20),
wobei der Körper (12) eine ringförmige Leitung (40) umfasst, welche die Öffnungen (16) axial verlängert und welche dazu eingerichtet ist, von der Klappe (20) verschlossen zu werden,
und wobei die ringförmige Leitung (40) einen ersten Abschnitt (40a), in welchen die Öffnungen (16) münden, und einen zweiten Abschnitt (40b) umfasst, welcher dazu eingerichtet ist, von der Klappe (20) verschlossen zu werden,
**dadurch gekennzeichnet, dass** der erste Abschnitt (40a) der ringförmigen Leitung (40) von einer ringförmigen äußeren Wand (42) begrenzt ist, welche an einem radialen Maß größer als das radiale Maß der Öffnungen (16) angeordnet ist, sowie von einer zweiten ringförmigen inneren Wand (44), welche an einem radialen Maß kleiner als das radiale Maß der Öffnungen (16) angeordnet ist.

2. Klappenventil (10) nach dem vorhergehenden Anspruch, **dadurch gekennzeichnet, dass** der Querschnitt des zweiten Abschnitts (40b) der ringförmigen Leitung (40) kleiner oder gleich der Summe der Querschnitte der Öffnungen (16) ist.

3. Klappenventil (10) nach dem vorhergehenden Anspruch, **dadurch gekennzeichnet, dass** die Öffnungen (16) entlang eines Kreises verteilt sind, welcher um die Hauptachse (A) des Klappenventils (10) zentriert ist, und dass die Leitung (40) von einer ringförmigen Form ist, welche um die Hauptachse des Klappenventils (10) zentriert ist.

4. Klappenventil (10) nach dem vorhergehenden Ansprüche, **dadurch gekennzeichnet, dass** die Klappe (20) von ringförmiger Form ist und dazu eingerichtet ist, gegen das freie Ende der beiden ringförmigen Wände in Kontakt zu kommen, die die Leitung (40) begrenzen.

## Claims

1. A relief valve (10) for an arc-control chamber in a high- or medium-voltage circuit breaker, the valve comprising:
a body (12) extending in a radial plane relative to a main axis of the arc-control chamber and having a plurality of axial orifices (16) formed therethrough and at least one valve member (20);
wherein the body (12) includes an annular duct (40) axially extending the orifices (16) and that is suitable for being closed by the valve member (20),
and wherein the annular duct (40) comprises a first portion (40a) into which the orifices (16) open out and a second portion (40b) that is suitable for being closed by the valve member (20),
**characterized in that** the first portion (40a) of the annular duct (40) is defined by an outer annular wall (42) that is situated radially outside the orifices (16) and by an inner second annular wall (44) that is situated radially inside the orifices (16).

2. A relief valve (10) according to the preceding claim, **characterized in that** the section of the second portion (40b) of the annular duct (40) is less than or equal to the sum of the sections of the orifices (16).

3. A relief valve (10) according to the preceding claim, **characterized in that** the orifices (16) are distributed along a circle centered on the main axis A of the relief valve (10) and **in that** the duct (40) is of annular shape centered on the main axis of the relief valve (10).

4. A relief valve (10) according to the preceding claim, **characterized in that** the valve member (20) is of annular shape and is suitable for coming into contact against the free end of both annular walls defining the duct (40).
